# EUROPÄISCHE PATENTSCHRIFT

(11) **EP 3 662 333 B1**
(45) Veröffentlichungstag und Bekanntmachung des Hinweises auf die Patenterteilung: **05.05.2021**
(21) Anmeldenummer: 18764998.3
(22) Anmeldetag: 30.07.2018
(51) Int. Cl.: G05D 1/00, G05D 1/02

(54) **VERFAHREN UND SYSTEM ZUM FERNSTEUERN EINES FAHRZEUGS**
METHOD AND SYSTEM FOR REMOTE CONTROL OF A VEHICLE
PROCÉDÉ ET SYSTÈME DE COMMANDE À DISTANCE D'UN VÉHICULE

(30) Priorität: 01.08.2017 DE 102017213204
(43) Veröffentlichungstag der Anmeldung: 10.06.2020
(73) Patentinhaber: Continental Automotive GmbH, 30165 Hannover (DE)
(72) Erfinder: BIEHLER, Martin, 92245 Kümmersbruck (DE); PETERS, Bardo, 84030 Landshut (DE); GEIGENFEIND, Mario, 93133 Burglengenfeld (DE)
(74) Vertreter: Continental Corporation
(86) Internationale Anmeldenummer: PCT/DE2018/200070
(87) Internationale Veröffentlichungsnummer: WO 2019/024963

(56) Entgegenhaltungen:
- EP-A1- 2 762 988
- WO-A1-2017/071143
- DE-A1-102012 014 991
- DE-A1-102014 018 108
- US-A1- 2012 101 660
- US-A1- 2016 327 950
- US-A1- 2017 192 423
- US-B1- 9 568 995

## Beschreibung

Die Erfindung betrifft ein Verfahren und ein System zum Fernsteuern eines Fahrzeugs.

Erste Automobilhersteller kündigen Fahrzeuge an, welche zukünftig vollständig autonom fahren können sollen. Dadurch entstehen völlig neue Möglichkeiten auf den Gebieten Mobilität, Komfort und Service. Allerdings wird für die größtenteils automatisierten Fahrzeuge weiterhin eine fahrtüchtige Person Voraussetzung sein, um ein Eingreifen zu ermöglichen, sobald das System zur Steuerung des Fahrzeugs an seine Grenzen kommt. Insbesondere kann ein Fahrer während der Fahrt gesundheitliche Probleme bekommen und überraschend fahruntüchtig werden. Zur Lösung dieses Problems ist es bekannt, das Fahrzeug eigenständig in einen sicheren Zustand zu führen bzw. kontrolliert abzubremsen, ohne andere Verkehrsteilnehmer zu gefährden.

Weiterhin haben insbesondere LKW-Fahrer und Busfahrer verpflichtende Ruhepausen einzulegen, z.B. nach 4,5 Stunden für 45 Minuten, und genannte Fahrer dürfen ferner nicht länger als eine bestimmte Höchstlenkzeit, z.B. 9 Stunden pro Tag, ihr Fahrzeug lenken. Falls nun z.B. eine Lieferung über eine größere Strecke transportiert werden muss, dauert dies unter Umständen mehrere Tage, oder ein zweiter Fahrer wird benötigt. Momentan lässt ein fahruntauglicher Fahrer typischerweise sein Fahrzeug stehen und steigt beispielsweise auf ein Taxi oder öffentliche Verkehrsmittel um. In diesem Fall muss das Fahrzeug wieder am zurückgelassenen Ort abgeholt werden. Dies produziert Kosten und Zeitaufwand.

Des Weiteren wird es auch zukünftig Systemeinschränkungen geben, die einem vollständigen automatisierten Fahren auf allen Straßen und unter allen Umständen entgegenstehen. Derartige Einschränkungen können z.B. in Witterungsbedingungen, Nebenstraßen, Feldwegen oder ähnlichem bestehen.

Die Offenlegungsschrift US2026/327950 und WO2017071143 offenbart eine Fernsteuerung von unbemannten Flugobjekten mit einem tragbaren Multifunktionsgerät, z.B. einem Smartphone.

In der Offenlegungsschrift EP2762988A1 gibt ein bedarfsweise aktivierbares Fernsteuerungssystem für Kraftfahrzeuge an. Dazu ist das Fahrzeug mit einer Funk-Datenkommunikationsverbindung mit einer Zentrale verbunden.

Die DE102014018108A1 gibt eine Vorrichtung zur Steuerung eines Rangiermanövers eines Fahrzeugs an, wobei Umgebungsbilder des Fahrzeugs auf einer berührungsempfindlichen Anzeigeeinrichtung angezeigt werden und durch ein Eingabemittel in dem Umgebungsbild der Anzeigeeinrichtung eine Trajektorie für das Fahrmanöver vorgegeben wird.

Eine weitere Offenlegungsschrift, die US2017/192423A1 gibt eine Vorrichtung und ein Verfahren für eine Unterstützung eines autonom fahrenden Fahrzeugs mit einer Fernsteuerung an. Das Fahrzeug fordert Unterstützung von einer Stelle außerhalb des Fahrzeugs an und setzt das Unterstützungssignal um.

Es ist die Aufgabe, der vorliegenden Erfindung ein Verfahren und ein System bereitzustellen, welches die vorstehend genannten Nachteile überwindet.

Die Aufgabe wird gelöst durch die Gegenstände der unabhängigen Patentansprüche. Vorteilhafte Ausführungsformen sind Gegenstand der abhängigen Ansprüche, der folgenden Beschreibung sowie der Figuren. Die vorliegende Erfindung ermöglicht - wie im Folgenden näher erläutert wird -, dass mittels einer Fernsteuerung eine Überwachung und ein Eingreifen in die Steuerung des Fahrzeugs in einer Notfallsituation möglich ist. Weiterhin wird ermöglicht, das Fahrzeug bei einem Systemausfall oder bei einer Überschreitung einer Systemgrenze komplett mittels der Fernsteuerung zu steuern.

Gemäß einem ersten Aspekt der Erfindung wird ein Verfahren zum Fernsteuern eines Fahrzeugs bereitgestellt. Bei dem Fahrzeug handelt es sich insbesondere um ein Kraftfahrzeug, z.B. ein Automobil in Form eines Pkw's, ein Lkw, ein Bus, ein Nutzfahrzeug oder ein Motorrad, ein Quad oder ein Fahrzeug mit drei Rädern. Das Verfahren umfasst das Erstellen eines äußeren Lagebilds eines Fahrzeugs mittels eines Sensorsystems zur Erfassung der Umgebung des Fahrzeugs. Weiterhin wird eine Trajektorie des Fahrzeugs mittels eines Fahrerassistenzsystems des Fahrzeugs vorgegeben, und es erfolgt ein drahtloses Übermitteln des äußeren Lagebilds und der Trajektorie an eine Fernsteuerung des Fahrzeugs, wobei die Fernsteuerung räumlich getrennt von dem Fahrzeug angeordnet ist. Weiterhin erfolgt ein Steuern des Fahrzeugs mittels der Fernsteuerung basierend auf der empfangenen Trajektorie und dem empfangenen äußeren Lagebild.

Außerdem kann ein Innenraum des Kraftfahrzeugs überwacht werden, z.B. mittels dafür eingerichteter Sensoren wie Innenraumkameras. Eine derartige Innenraumüberwachung kann ein inneres Lagebild des Kraftfahrzeugs liefern. Das innere Lagebild kann beispielsweise Informationen über die Insassen, deren (Gesundheits-)Zustand und/oder Tätigkeiten beinhalten. Beispielsweise kann mittels der Sensoren erfasst werden, wie aufmerksam der Fahrer des Fahrzeugs ist, oder ob die Insassen angegurtet sind.

Das Steuern des Fahrzeugs mittels der Fernsteuerung kann neben der empfangenen Trajektorie und dem empfangenen äußeren Lagebild auch auf dem inneren Lagebild basieren, welches ebenfalls drahtlos an die Fernsteuerung übermittelt werden kann. Insbesondere kann aus dem inneren Lagebild abgeleitet werden, ob der Fahrer des Fahrzeugs fahrtüchtig ist oder nicht (z.B. bei einer plötzlichen Erkrankung, oder weil der Fahrer eingeschlafen ist) . Sofern der Fahrer fahruntüchtig ist, kann automatisch eine Übernahmeaufforderung an die Fernsteuerung generiert werden, sodass die Steuerung des Kraftfahrzeugs auf die Fernsteuerung übertragen werden kann, um auf diese Weise insbesondere eine Unfallsituation zu vermeiden und/oder beispielsweise das Kraftfahrzeug mittels der Fernsteuerung in ein nächstgelegenes Krankenhaus zu steuern.

Das Sensorsystem kann beispielsweise ein Kamerasystem, insbesondere ein Surround-View-System mit einer Frontkamera, einer Rückwärtskamera und Seitenkameras umfassen, wobei das Surround-View-System insbesondere eine 360° Rundumsicht des Fahrzeugs als Bestandteil dessen äußeren Lagebilds und entsprechende Daten erzeugen kann, welche an die Fernsteuerung übertragen werden können. Weiterhin kann das Sensorsystem zur Erzeugung des äußeren Lagebilds des Fahrzeugs insbesondere einen Radar-Sensor, einen Laser-Sensor, ein Navigationssystem oder einen Lidar-Sensor aufweisen. Eine Telefonübertragung zu einem Fahrer und weiteren Insassen des Fahrzeuges kann ebenfalls vorgesehen sein, muss jedoch nicht zwingend aktiv sein.

Die Trajektorie des Fahrzeugs kann ein SOLL-Weg sein, welcher einen gewünschten Weg beschreibt, den das Fahrzeug nehmen soll, um an ein vorgegebenes örtliches Ziel zu gelangen. Der SOLL-Weg kann sich dabei aus mehreren Einzelpositionen zusammensetzen. Insbesondere kann es sich bei der Trajektorie des Fahrzeugs um den unmittelbar in der Umgebung des Fahrzeugs befindlichen SOLL-Weg handeln, welcher in dem Lagebild dargestellt werden kann. Zum Vorgeben der Trajektorie des Fahrzeugs kann das Fahrassistenzsystem beispielsweise auf Daten eines Navigationssystems zurückgreifen. Insbesondere kann das Navigationssystem kontinuierlich eine aktuelle Position des Fahrzeugs ermitteln und entsprechende Daten dem Fahrerassistenzsystem zur Verfügung stellen. Weiterhin kann das Navigationssystem dem Fahrerassistenzsystem eine Routenführung zur Verfügung stellen, wobei die Routenführung einen kontinuierlich aktualisierten vorgegebenen Weg zwischen der aktuellen Position des Fahrzeugs und einer vorgegebenen örtlichen Zielposition beinhaltet. Insbesondere basierend auf der von dem Navigationssystem erhaltenen Routenführung kann das Fahrerassistenzsystem dem Fahrzeug eine Trajektorie vorgeben, welche derart mit der Routenführung korrespondiert, dass die vorgegebene Zielposition sicher erreicht wird. Unter dem Merkmal "sicher erreicht" kann in diesem Zusammenhang insbesondere verstanden werden, dass eine möglichst sichere Trajektorie gewählt wird, wobei gefährliche Verkehrssituationen und Unfälle vermieden werden.

Das Fahrerassistenzsystem kann weiterhin dazu eingerichtet sein, das Fahrzeug derart zu steuern, dass das Fahrzeug autonom der vorgegebenen Trajektorie folgt. Insbesondere kann das Fahrerassistenzsystem in diesem Zusammenhang dazu eingerichtet sein, in Abhängigkeit von der vorgegebenen Trajektorie ein Lenksystem, ein Bremssystem sowie ein Antriebssystem des Fahrzeugs zu steuern. Somit wird ermöglicht, dass das Fahrzeug zum einen mittels des Fahrerassistenzsystems in einem autonomen Fahrmodus gefahren werden kann, wobei ein Fahrer innerhalb des Fahrzeugs nicht in die Steuerung des Fahrzeugs eingreifen muss. Zum anderen ist es weiterhin möglich, dass das Fahrzeug mittels der Fernsteuerung in einem ferngesteuerten Fahrmodus gefahren werden kann, wobei der Fahrer innerhalb des Fahrzeugs ebenfalls nicht in die Steuerung des Fahrzeugs eingreifen muss, denn dies kann insbesondere durch einen Bediener der Fernsteuerung erfolgen.

Gemäß der vorliegenden Erfindung wird somit eine Art Chauffeur vorgeschlagen, welcher aus der Ferne das Fahrzeug, insbesondere einen hochautomatisierten PKW, einen Bus oder einen Lkw überwachen und steuern kann. Insbesondere kann diese Chauffeur-Funktion durch das Steuern des Fahrzeugs mittels der Fernsteuerung, insbesondere durch einen Bediener der Fernsteuerung, basierend auf der empfangenen Trajektorie und dem empfangenen äußeren Lagebild erfüllt werden. Der Fernsteuerung bzw. deren Bediener können insbesondere Informationen über sämtliche relevanten Fahrdaten, wenn vorhanden Bilder der Fahrgastzelle (inneres Lagebild), Navigationsdaten und Fahrzeugdaten bereitgestellt werden. Der Bediener der Fernsteuerung kann somit aus der Ferne insbesondere von dem Sensorsystem erzeugte Live-Bilder betrachten, in welche die vorgegebene Traj ektorie des Fahrzeugs eingefügt sein kann, um auf diese Weise das Fahrzeug bestmöglich überwachen zu können.

Die Umsetzung dieser Chauffeur-Funktion ist bereits mit einem SAE Level 4 ergänzend für hochautomatisierte Fahren möglich. Die Chauffeur-Funktion kann als eine zusätzliche Sicherheitsstufe dienen, falls das Fahrerassistenzsystem und/oder der Fahrer des Fahrzeugs für die Fahraufgabe nicht zur Verfügung steht. Dies könnte z.B. auch den "End of Use Case" für das automatisierte Fahrsystem miteinschließen. Die vorliegende Erfindung ermöglicht, dass kein Insasse in hochautomatisierten Fahrzeugen mehr jederzeit zwingend fahrtüchtig sein muss, denn die Überwachung und Steuerung des Fahrzeugs ist aus der Ferne möglich.

Somit ermöglicht die vorliegende Erfindung eine Fahrzeugkontrolle und eine Fahrzeugsteuerung aus der Ferne zu jederzeit, insbesondere mithilfe der Fahrzeugsensorik, Karten und sonstigen Umfeld-Daten. Die Chauffeur-Funktion kann flexibel, ohne Anfahrtszeit und Anfahrtskosten bestellt bzw. angefordert werden. Beispielsweise kann mittels des Fahrerassistenzsystems des Fahrzeugs eine Übergabeaufforderung an die Fernsteuerung übermittelt werden, wobei die Übergabeaufforderung von einem Fahrer des Fahrzeugs indiziert werden kann oder automatisch durch das Fahrerassistenzsystem generiert werden kann.

Es ist somit möglich, dass auch plötzlich fahruntüchtig gewordene Personen ihr Fahrzeug nicht stehen lassen müssen. Im kommerziellen Bereich kann ein Unternehmen viel Geld sparen, wenn die Lieferung schneller an ihr Ziel kommt, da beispielsweise ein Lkw in den gesetzlich geforderten Ruhepausen von einer anderen Person aus der Ferne weiter kontrolliert und gesteuert werden kann. Der Fahrer des Fahrzeugs kann in dieser Zeit seine vorgeschriebene Pause machen, da er nicht selbst sein Fahrzeug steuern und überwachen muss.

Die Fernsteuerung des Fahrzeugs ist über ein Bedienelement, zum Beispiel ein Lenkrad, oder über ein Vorzeichnen einer gewünschten Route möglich, wie dies im Folgenden näher erläutert wird. Insbesondere kann dabei vorgesehen sein, dass während der Fernsteuerung des Fahrzeugs ein plötzliches Eingreifen des Fahrers oder weiterer Insassen des Fahrzeugs nur bedingt möglich ist. Bei einer auftretenden Gefahrensituation ist jedoch stets gewährleistet, dass der Insasse bzw. der Fahrer des Fahrzeugs in die Steuerung des Kraftfahrzeugs eingreifen kann.

So ist gemäß einer Ausführungsform vorgesehen, dass das Fahrzeug mittels eines Bedienelements der Fernsteuerung gesteuert wird.

Beispielsweise kann ein Bediener der Fernsteuerung das Bedienelement der Fernsteuerung betätigen. Dieses Betätigen kann von der Fernsteuerung erfasst werden, und die Fernsteuerung kann basierend auf der erfassten Betätigung des Bedienelements das Fahrzeug fernsteuern.

Das Bedienelement kann insbesondere ein Lenkrad umfassen. Weiterhin kann das Bedienelement ein Bremspedal und ein Gaspedal umfassen. Weiterhin kann das Bedienelement auch eine Handsteuerung, z.B. eine Tastatur usw. umfassen. Auch ein Kupplungspedal kann zu dem Bedienelement gehören, sofern es sich bei dem Fahrzeug, welches mittels der Fernsteuerung ferngesteuert werden soll, um ein Fahrzeug mit nicht-automatischem Kupplungsgetriebe handelt. Ferner kann das Bedienelement beispielsweise auch ein Betätigungselement für einen Blinker, ein Fahrzeuglicht oder einen Scheibenwischer umfassen. Ein automatisches Blinken beim Abbiegen könnte auch denkbar sein. Im Prinzip können sämtliche Bedienelemente des Kraftfahrzeugs in der Fernsteuerung nachgebildet sein.

Die Fernsteuerung kann insbesondere dazu eingerichtet sein, ein Betätigen des Bedienelements zu erfassen und entsprechende Steuerungsdaten zu generieren sowie die Steuerungsdaten an das Fahrerassistenzsystem des Fahrzeugs zu übermitteln. Das Fahrerassistenzsystem kann wiederum dazu eingerichtet sein, basierend auf den von der Fernsteuerung empfangenen Steuerungsdaten das Fahrzeug zu steuern. Beispielsweise kann die Fernsteuerung ein Betätigen eines Lenkrads des Bedienelements (insbesondere durch einen Bediener der Fernsteuerung) der Fernsteuerung erfassen, und entsprechende Lenkdaten an das Fahrerassistenzsystem des Fahrzeugs übermitteln. Das Fahrerassistenzsystem kann dann beispielsweise basierend auf den von der Fernsteuerung empfangenen Lenkdaten ein Lenksystem des Fahrzeugs derart steuern, dass das Fahrzeug entsprechend der Betätigung des Lenkrads der Fernsteuerung gelenkt wird. Analoges gilt insbesondere für ein Betätigen eines Gaspedals, eines Kupplungspedals und eines Bremspedals.

Ein Ausgangspunkt der vorliegenden Erfindung liegt in einem hochautomatisierten Fahrzeug mit einer kontinuierlichen Datenverbindung, wobei mittels des Sensorsystems eine Kollisionsgefahr erkannt werden kann und mittels des Fahrerassistenzsystems und/oder der Fernsteuerung beispielsweise gelenkt, abgebremst oder beschleunigt werden kann, um die Kollision zu vermeiden. Ein derartiges Fahrzeug sollte eigenständig zu seinem Ziel fahren können, wenn sich nichts Außergewöhnliches zwischen dem Fahrzeug und dem Ziel befindet.

In diesen wenigen Fällen, in welchen das Fahrzeug bzw. dessen Fahrerassistenzsystem an seine Grenzen gelangt, kann die Fernsteuerung eingreifen, um eine sichere Weiterfahrt zu ermöglichen. Entstehen können solche Fälle beispielsweise durch eine unübersichtliche Straßenführung oder Kreuzungen, durch eine durch Baustellen bedingte Übergangsbeschilderung (beispielsweise, wenn über Schotter gefahren werden muss oder wenn nur Absperrband als Straßenmarkierung dient). Weiterhin kann eine solche Situation entstehen, wenn der Fahrzeugführer aufgrund einer plötzlichen Erkrankung nicht mehr weiterfahren kann, und z.B. eine Fahrt ins Krankenhaus notwendig wird. Weiterhin kann ein Eingreifen der Fernsteuerung notwendig werden, wenn Feldwege Wiesen oder Parkplätze befahren werden, oder beim Fahren durch eine Matschdecke oder durch eine Schneedecke, welche die Linien auf der Fahrbahn bedeckt.

Ein hochautomatisiertes Fahrzeug, welches eigenständig autonom ans Ziel kommen soll, sollte den zukünftigen Weg anhand von Navigationsmaterial und Kartenmaterial ermitteln, um Steuerbefehle insbesondere an die Lenkung geben zu können. Das Fahrerassistenzsystem muss folglich einen Weg bzw. eine Linie ermitteln, welche abgefahren wird. Die Wegpunkte/absoluten Koordinaten, welche eine Linie bilden und in naher Zukunft (im Kamerabild) liegen, können der Fernsteuerung aus der Ferne übersendet werden.

Insbesondere kann ein Benutzer der Fernsteuerung das Lagebild des Sensorsystems, beispielsweise das Kamerabild, sowie die eingezeichneten Wegpunkte überwachen. Sofern nun das Fahrzeug wegen einer der oben genannten Situationen an seine Grenzen gelangt, kann vorgesehen sein, dass durch den Benutzer der Fernsteuerung manuell neue Wegpunkte bzw. Koordinaten eingezeichnet werden, um die Situation bestmöglich und sicher zu meistern (Vorzeichnen einer gewünschten Route bzw. Trajektorie) .

In diesem Sinne ist alternativ oder zusätzlich gemäß einer weiteren Ausführungsform vorgesehen, dass die Trajektorie mittels der Fernsteuerung korrigiert wird, insbesondere sofern von der Fernsteuerung bzw. deren Nutzer basierend auf dem Lagebild erkannt wird, dass eine sicherere Trajektorie als die durch das Fahrerassistenzsystem vorgegebene Trajektorie existiert, wobei das Fahrzeug mittels der Fernsteuerung basierend auf der korrigierten Trajektorie und dem empfangenen äußeren Lagebild gesteuert wird. Zusätzlich zu dem äußeren Lagebild und - sofern vorhanden - dem inneren Lagebild können alle Daten, die zu einer Eigenpositionierung herangezogen werden, wie z.B. Lenkwinkel, Radrehzahl und Drehraten, drahtlos mit übertragen werden, und darauf basierend das Kraftfahrzeug mittels der Fernsteuerung gesteuert werden.

Weiterhin kann (sozusagen im Sinne eines Event-Datenrecorders) vorgesehen sein, dass nichtflüchtig gespeichert wird, in welchen Zeiträumen und durch welche Aktionen der Fahrer das Kraftfahrzeug gesteuert hat, und in welchen Zeiträumen und durch welche Aktionen das Kraftfahrzeug über die Fernsteuerung gesteuert worden ist. Weiterhin kann auch nichtflüchtig gespeichert werden, in welchen Zeiträumen und durch welche Aktionen das Fahrerassistenzsystem das Kraftfahrzeug gesteuert hat. Insbesondere wenn eine Unfallsituation eingetreten ist, kann auf die gespeicherten Daten zurückgegriffen werden, um zu rekonstruieren, wie und durch wen bzw. was das Kraftfahrzeug während der Unfallsituation gesteuert worden ist. Dies kann insbesondere für die Beantwortung der Frage, wer für die Unfallsituation verantwortlich ist, hilfreich sein. Die gespeicherten Daten können beispielsweise nach Ablauf einer festgelegten Zeit wieder gelöscht werden, sofern keine Unfallsituation eingetreten ist.

Das Korrigieren der Trajektorie mittels der Fernsteuerung kann insbesondere erfolgen, indem auf einem Touchscreen die korrigierte Trajektorie eingezeichnet wird. Dabei kann insbesondere vorgesehen sein, dass das Kamerabild ab der ersten Berührung des Touchscreens, z.B. mit einem Finger oder mit einem Stift, eingefroren wird, und erst wieder dann ein aktualisiertes Kamerabild angezeigt wird, sobald der Finger oder Stift von dem Touchscreen abgesetzt wird.

Ebenso ist es möglich, dass der Benutzer der Fernsteuerung aus der Ferne die korrigierte Trajektorie in ein ergänzendes Bild der Umgebung des Fahrzeugs einzeichnet, z.B. in eine Karte, wobei in das ergänzende Bild ergänzend auch alle wichtigen Informationen von dem Sensorsystem, insbesondere von einem Kamerasystem des Fahrzeugs, übertragen werden. In diesem Sinne ist gemäß einer weiteren Ausführungsform vorgesehen, dass ein ergänzendes Bild der Umgebung des Fahrzeugs an die Fernsteuerung übermittelt wird, wobei das ergänzende Bild insbesondere von einem Sensor erzeugt wird, welcher nicht an dem Fahrzeug angeordnet ist, und wobei die Trajektorie durch die Fernsteuerung basierend auf dem Lagebild und dem ergänzenden Bild korrigiert wird.

Durch das vorstehend beschriebene Vorzeichnen der korrigierten Trajektorie kann eine Differenz zwischen einem ersten IST-Weg und einem zweiten IST-Weg besonders geringgehalten werden. Der erste IST-Weg kann von dem vorgegebenen SOLL-Weg insbesondere in einer Vorausrichtung des Fahrzeugs (y-Richtung) abweichen, da die Übertragung von Daten des Sensorsystems, insbesondere der Bildübertragung, eine gewisse Verzögerung mit sich bringt, sodass das Fahrzeug immer bereits eine gewisse Distanz, z.B. wenige Meter weiter vorne ist, als es dem Bediener der Fernsteuerung beispielsweise auf einem Bildschirm angezeigt wird. Der Bediener der Fernsteuerung lenkt folglich schon verspätet ein. Bis nun jedoch der aktuell gewünschte Lenkwinkel an das Fahrzeug übermittelt wird, befindet sich das Fahrzeug bereits auf dem zweiten IST-Weg bzw. schon um eine weitere Differenz in y-Richtung weiter vorne. Durch das Vorzeichen in der korrigierten Trajektorie können der erste IST-Weg und der zweite IST-Weg näher zusammenrücken.

Weiterhin bietet das vorstehend beschriebene Vorzeichnen der korrigierten Trajektorie den Vorteil, dass nicht immer kontinuierlich der Lenkwinkel übermittelt werden muss, sondern dass stattdessen abzufahrende Punkte, welche sich vor dem Fahrzeug befinden, angegeben bzw. übermittelt werden können. Das Fahrerassistenzsystem innerhalb des Fahrzeugs sowie auch ein Gerät des Fernsteuerers (z.B. dessen PC; Entscheidungskriterien können zwischen Fahrzeug und Fernsteurer (-Equipment) bei Bedarf festgelegt werden) kann aus diesen Punkten eine Linie errechnen, aus welcher die benötigten Lenkwinkel bzw. Lenkbewegungen entnommen (berechnet) werden können. Das Einzeichnen bzw. Vorzeichnen der korrigierten Trajektorie ermöglicht somit, dass die vorstehend beschriebenen Abweichungen in y-Richtung besonders geringgehalten werden können.

Gemäß einer weiteren Ausführungsform ist vorgesehen, dass kontinuierlich die Qualität einer zur Verfügung stehenden Datenverbindung zwischen dem Fahrzeug einerseits, insbesondere zwischen dem Sensorsystem und dem Fahrerassistenzsystem, und der Fernsteuerung andererseits ermittelt wird, und dass das Fahrzeug nur dann mittels des Bedienelements der Fernsteuerung gesteuert wird, sofern die ermittelte Qualität der Datenverbindung ein vorbestimmtes erstes Qualitätsniveau erreicht wird. Das erste Qualitätsniveau kann dabei derart hoch gewählt werden, dass bei Erreichen des ersten Qualitätsniveaus eine hinreichend schnelle und zuverlässige Datenübertragung erfolgen kann, um eine sichere Steuerung des Fahrzeugs mittels des Bedienelements der Fernsteuerung zu gewährleisten.

Bei der Qualität der zur Verfügung stehenden Datenverbindung kann es sich insbesondere um eine Geschwindigkeit handeln, mit welcher Daten übertragen werden können. Das Fahrzeug kann insbesondere auf unterschiedliche zur Verfügung stehende Datenverbindungen (z.B. Mobilfunknetze oder Satelliten-Verbindungen) zurückgreifen und kontinuierlich deren Qualität, insbesondere deren Signalstärke und Stabilität überprüfen bzw. ermitteln. Insbesondere kann das Fahrzeug dazu eingerichtet sein, auf die jeweils beste zur Verfügung stehende Verbindung zurückzugreifen. Vorgesehen sein kann auch, dass "Car to X"-Daten von anderen Fahrzeugen verwendet werden, um aktuelle Verkehrsaufkommnisse, z.B. bevorstehende Hindernisse, in die Berechnung miteinfließen zu lassen, um auf diese Weise kritische Verkehrssituationen besser erkennen zu können.

### Ferner könnten auch andere Fahrzeuge oder

Infrastruktur-Komponenten (z.B. eine "intelligente" Ampel, die das Verkehrsgeschehen aufnehmen und ermitteln kann, in welcher Position sich welches Fahrzeug relativ zu der Ampel befindet), die sich in der Nähe des Kraftfahrzeugs bzw. Ego-Fahrzeugs befinden, die Position des zu steuernden Kraftfahrzeugs bestätigen oder korrigieren und die Information an die Fernsteuerung bzw. an den "Fernsteuerer" weiterleiten. Auf diese Weise kann insbesondere kontrolliert werden, ob ein durch die Fernsteuerung vorgegebener SOLL-Weg eingehalten wird bzw. wie weit ein IST-Weg des Kraftfahrzeugs von dem SOLL-Weg abweicht. Gegebenenfalls kann ein neuer SOLL-Weg mittels der Fernsteuerung vorgegeben werden.

Das Fahrerassistenzsystem des Fahrzeugs kann eine Übergabeaufforderung an die Fernsteuerung übermitteln, sofern die ermittelte Qualität der Datenverbindung das erste Qualitätsniveau erreicht oder überschreitet. Das Ermitteln der Qualität der zur Verfügung stehenden Datenverbindung kann beispielsweise mittels einer dazu eingerichteten Kommunikationseinheit des Fahrzeugs erfolgen. Zusätzlich kann vorgesehen sein, dass Informationen über die Qualität einer zur Verfügung stehenden Datenverbindung zwischen dem Fahrzeug und der Fernsteuerung aus vorhandenen Netzabdeckungskarten entnommen werden.

Weiterhin ist vorgesehen, dass die Trajektorie nur dann mittels der Fernsteuerung korrigiert wird, sofern die ermittelte Qualität der Datenverbindung ein vorbestimmtes zweites Qualitätsniveau erreicht, wobei das zweite Qualitätsniveau unterhalb des ersten Qualitätsniveaus liegt. Somit kann das vorstehend beschriebene Vorzeichnen der Trajektorie auch dann erfolgen, wenn die Qualität der Datenverbindung für eine Steuerung mittels des Bedienelements (z.B. ein Lenkrad oder ein Joystick, Tastatur etc.) nicht ausreicht, weil der beschriebene Weg bzw. die korrigierte Trajektorie um einige Autolängen in der Zukunft liegen kann.

Insbesondere Netzabdeckungen entlang von Autobahnen haben eine hohe Priorität. Sofern die vorliegende Erfindung insbesondere in LKWs und Fernbussen verwendet wird, können diese relativ eigenständig mittels des Fahrerassistenzsystems oder der Fernsteuerung große Distanzen fahren, während der Fahrer seine Ruhezeiten einhält. Die vorliegende Erfindung ermöglicht in diesem Zusammenhang, dass insbesondere die vorgenannten Fahrzeuge überwacht werden können, um deren Sicherheit zu gewährleisten.

Außerdem kann vorgesehen sein, dass die Steuerung des Fahrzeugs von der Fernsteuerung an das Fahrerassistenzsystem übergeben wird, sofern die ermittelte Qualität der Datenverbindung das vorbestimmte zweite Qualitätsniveau nicht erreicht.

Falls die ermittelte Qualität der Datenverbindung unterhalb des zweiten Qualitätsniveaus liegt, kann nicht sichergestellt werden, dass an die Fernsteuerung ausreichend Daten zur sicheren Steuerung des Fahrzeugs übermittelt werden. In diesem Falle kann der Fahrer des Fahrzeugs aufgefordert werden, die Steuerung des Fahrzeugs zu übernehmen. Sofern dieser nicht reagiert, kann das Fahrzeug mittels des Fahrerassistenzsystems beispielsweise an einem sicheren Ort zum Stehen gebracht werden. Dort könnte beispielsweise ein Notruf eigenständig abgesetzt werden. In diesem Sinne kann insbesondere vorgesehen sein, dass mittels des Fahrerassistenzsystems nach einer erfolgten Übernahme der Steuerung des Fahrzeugs durch das Fahrerassistenzsystem eine Übergabeaufforderung an einen Fahrer des Fahrzeugs generiert wird, und wobei mittels des Fahrerassistenzsystems ein Minimum-Risk-Maneuver durchführt wird, sofern der Fahrer des Fahrzeugs nach Ablauf eines festgelegten Zeitraums nach der Übergabeaufforderung die Steuerung des Fahrzeugs nicht übernimmt.

Gebiete mit Verbindungsproblemen (insbesondere Gebiete, in welchen die Qualität der Datenverbindung das erste Qualitätsniveau und/oder das zweite Qualitätsniveau nicht erreicht) können dokumentiert werden, um diese Gebiete - sofern möglich - zukünftig zu meiden, oder um den Fahrer des Fahrzeugs früher informieren zu können, falls dieser fahrtüchtig ist.

Weiterhin kann ein Warnsignal für den Fahrer des Fahrzeugs generiert werden, z.B. ein akustisches Signal, ein Lichtsignal oder ein Vibrationssignal, sofern ein möglicher Verlust der Datenverbindung erkannt wird. Auf diese Weise hat der Fahrer die Möglichkeit zu entscheiden, ob das Fahrzeug insbesondere mittels des Fahrerassistenzsystems sicher zum Stehen gebracht wird, oder ob der Fahrer selbst die Fahrzeugführung übernehmen möchte.

Gemäß einer weiteren Ausführungsform ist ferner vorgesehen, dass eine Kommunikationsverbindung zwischen dem Fahrer des Fahrzeugs und einem Bediener der Fernsteuerung aufgebaut wird. Bei der Kommunikationsverbindung kann es sich beispielsweise um eine Telefonverbindung oder eine Videoverbindung handeln. Insbesondere kann die Kommunikationsverbindung durch den Fahrer des Fahrzeugs aufgebaut werden. Auf diese Weise können der Fahrer und mögliche weitere Insassen des Fahrzeugs selbst entscheiden, ob sie mit dem Bediener der Fernsteuerung kommunizieren, insbesondere sprechen wollen. Auf diese Weise leistet dieser Ausführungsform einen Beitrag zur Erhöhung der Privatsphäre des Fahrers bzw. weiterer Insassen des Fahrzeugs, da keine fremde Person im Fahrzeug sitzt bzw. der Bediener der Fernsteuerung sich nicht im Fahrzeug befindet und eine Kommunikationsverbindung mit dem Fahrer bzw. den Insassen des Fahrzeugs nur auf deren Wunsch hin hergestellt wird.

Gemäß einem zweiten Aspekt der Erfindung wird ein System zum Fernsteuern eines Fahrzeugs bereitgestellt. Das System umfasst eine vorstehend im Zusammenhang mit dem ersten Aspekt der Erfindung beschriebene Fernsteuerung, welche insbesondere dazu eingerichtet ist, ein äußeres Lagebild eines Fahrzeugs und eine vorgegebene Trajektorie des Fahrzeugs von dem Fahrzeug zu empfangen, wobei die Fernsteuerung räumlich getrennt von dem Fahrzeug angeordnet ist. Weiterhin ist die Fernbedienung dazu eingerichtet, das Fahrzeug basierend auf der empfangenen Trajektorie und dem empfangenen äußeren Lagebild zu steuern. Bezüglich Ausführungsformen, Effekten und Vorteilen des Systems nach dem zweiten Aspekt der Erfindung wird zur Vermeidung von Wiederholungen insbesondere auf die vorstehenden Ausführungen im Zusammenhang mit dem Verfahren gemäß dem ersten Aspekt der Erfindung sowie auf die folgende Figurenbeschreibung verwiesen.

Im Folgenden werden Ausführungsbeispiele der Erfindung anhand der schematischen Zeichnung näher erläutert. Hierbei zeigt
- Fig. 1: ein Entscheidungsdiagramm zur Durchführung eines Ausführungsbeispiels eines Verfahrens gemäß der vorliegenden Erfindung,
- Fig. 2: eine perspektivische Ansicht einer Fernsteuerung eines Ausführungsbeispiels eines Systems zum Fernsteuern eines Fahrzeugs gemäß der vorliegenden Erfindung,
- Fig. 3: eine Draufsicht auf ein Fahrzeug auf einer Straße mit Darstellung eines SOLL-Wegs und zweier IST-Wege,

- Fig. 4: ein Bild einer Kamera eines Fahrzeugs mit eingezeichnetem, vorgegebenen SOLL-Weg und korrigierten SOLL-Weg,
- Fig. 5: ein Bild einer Kamera eines Fahrzeugs auf einem Touchscreen mit eingezeichnetem, korrigierten SOLL-Weg und einem Stift zum Zeichnen auf dem Touchscreen und
- Fig. 6: eine auf einem Touchscreen dargestellte Karte, welche ein Fahrzeug und dessen Umgebung zeigt, wobei mittels eines Stifts ein korrigierter SOLL-Weg eingezeichnet werden kann.

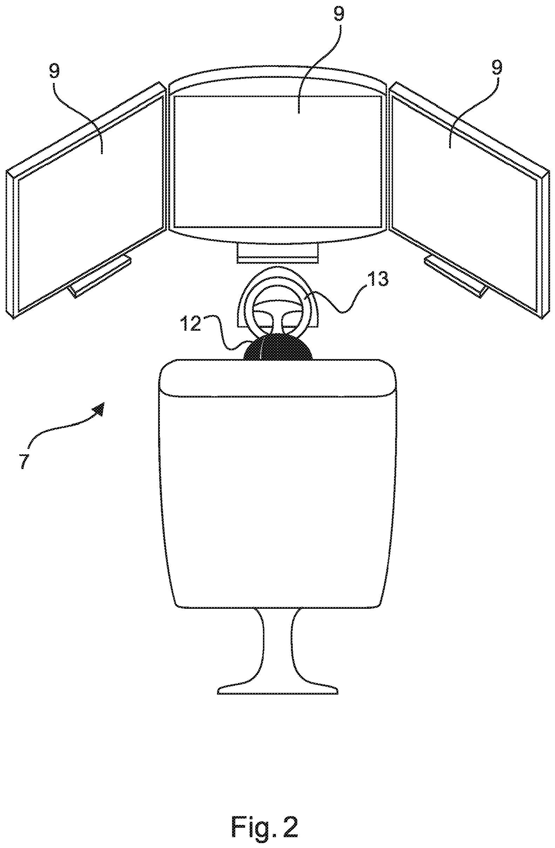

Fig.l zeigt ein hochautomatisiertes Fahrzeug 1 (z.B. ein Pkw, der autonom fahren kann), welches ein Sensorsystem 2 umfasst, z.B. ein Surround-View-System mit mehreren Kameras zur Erzeugung eines Lagebilds in Form eines Rundumbilds der äußeren Umgebung des Fahrzeugs 1. Weiterhin umfasst das Fahrzeug 1 ein Fahrerassistenzsystem 3, welches mit dem Sensorsystem 2 kommunikativ verbunden ist. Das Fahrerassistenzsystem 3 umfasst ein Navigationssystem 4 und eine erste Kommunikationsschnittstelle 5 zum Austausch von Daten mit einer zweiten Kommunikationsstelle 6 einer Fernsteuerung 7 zum Fernsteuern des Fahrzeugs 1, wobei die Fernsteuerung 7 örtlich getrennt von dem Fahrzeug 1 angeordnet ist. Fig. 2 zeigt, wie die Fernsteuerung 7 im Detail ausgestattet sein kann.

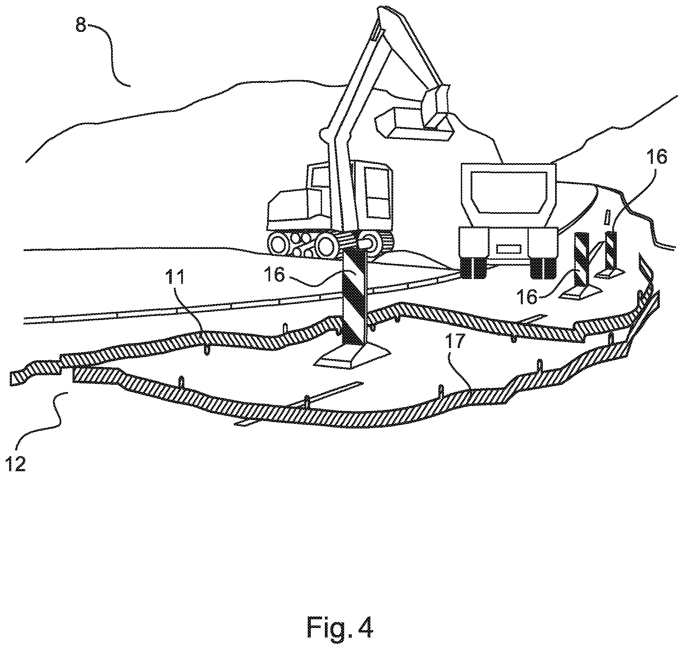

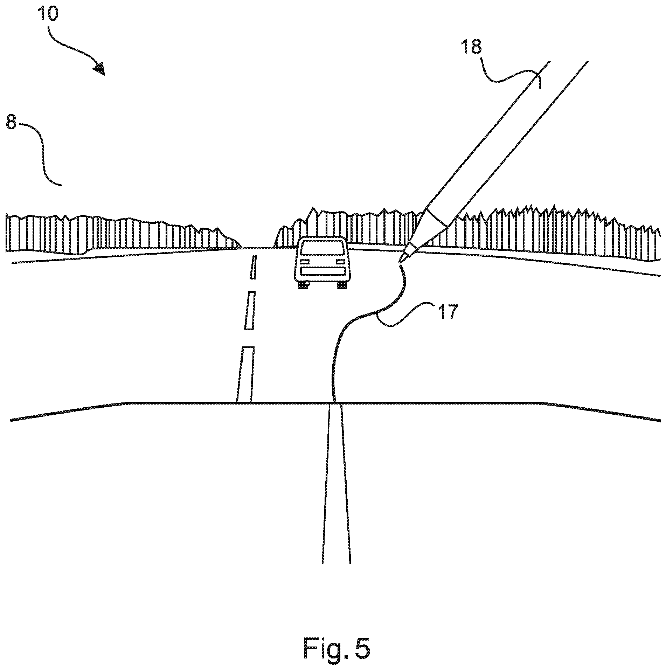

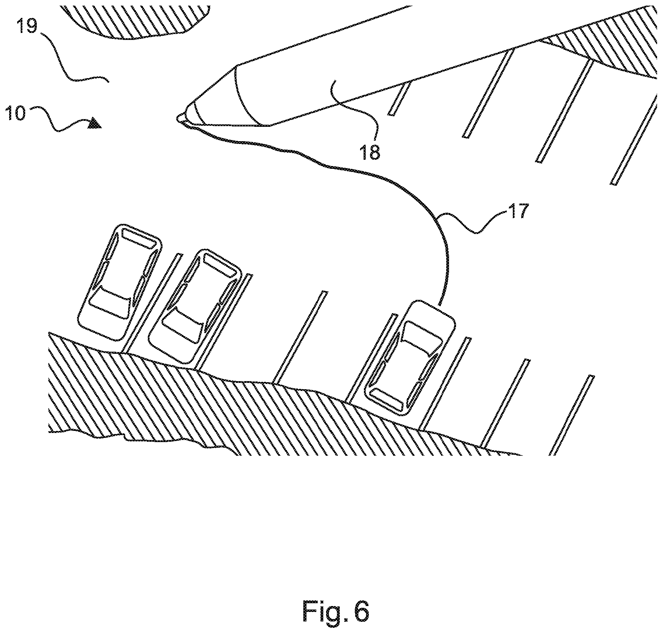

Mittels des Sensorsystems 2 wird ein äußeres Lagebild 8 des Fahrzeugs 1 erstellt. Beispiele für ein solches Lagebild 8 sind durch Fig. 4 und 5 gezeigt. Das Lagebild 8 wird über die Kommunikationsschnittstelle 5 des Fahrerassistenzsystems 3 an die zweite Kommunikationsschnittstelle 6 der Fernsteuerung 7 drahtlos übermittelt, z.B. über ein Mobilfunknetz oder ein Satellitennetz. Die Fernsteuerung 7 kann einen oder mehrere Monitore 9 (vgl. Fig. 2) oder Touchscreens 10 (Fig. 5 und 6) umfassen, auf welchen jeweils das Lagebild 8 dargestellt werden kann.

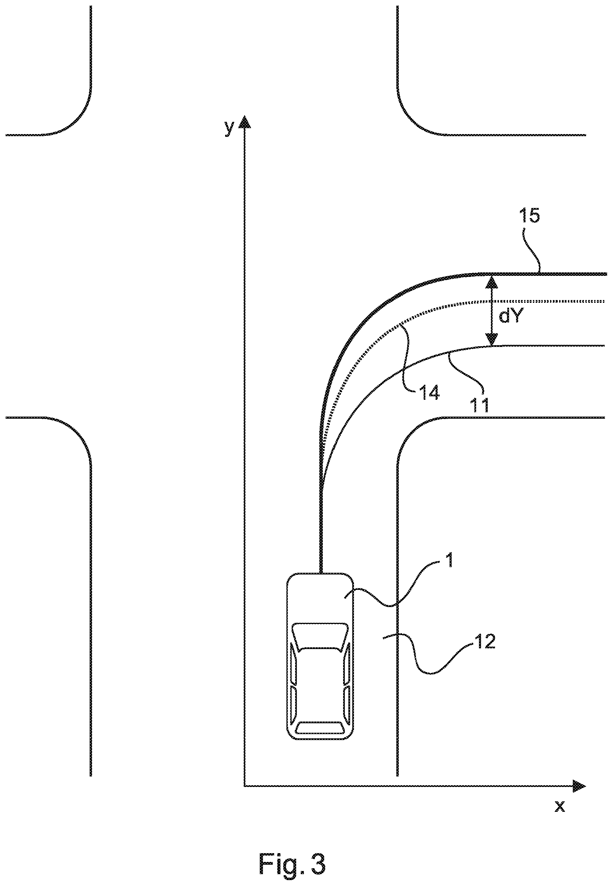

Unter Nutzung des Navigationssystems 4 gibt das Fahrerassistenzsystem 3 weiterhin eine Trajektorie für das Fahrzeug 1 vor, in dem gezeigten Ausführungsbeispiel in Form eines Soll-Weges 11 (vgl. Fig. 3) . Auch der SOLL-Weg 11 wird über die Kommunikationsschnittstelle 5 des Fahrerassistenzsystems 3 an die zweite Kommunikationsschnittstelle 6 der Fernsteuerung 7 drahtlos übermittelt, z.B. über ein Mobilfunknetz oder ein Satellitennetz. Das Fahrzeug 1 kann dann mittels der Fernsteuerung 7 basierend auf der empfangenen Trajektorie 11 und dem empfangenen äußeren Lagebild 8 gesteuert werden.

Das Fahrzeug 1 bewegt sich auf einer Straße 12. Der SOLL-Weg 11 beschreibt dabei einen gewünschten Weg, welchen das Fahrzeug 1 nehmen soll, um ein vorgegebenes Ziel zu erreichen. Da die Übertragung der Bilddaten des Kamerasystems 2 jedoch eine gewisse Verzögerung mit sich bringt, befindet sich das Fahrzeug 1 immer bereits einige Meter in y-Richtung (insbesondere die Geradeausrichtung des Fahrzeugs 1) weiter vorne als es einem Bediener 12 eines Bedienelements in Form eines Lenkrads 13 der Fernsteuerung 7 beispielsweise am Monitor 9 angezeigt wird, was in Fig. 3 durch einen ersten IST-Weg 14 veranschaulicht wird.

Der Bediener 12 des Lenkrads 13 lenkt folglich bereits verspätet ein. Bis nun jedoch der aktuell gewünschte Lenkwinkel an das Fahrzeug 1 übermittelt worden ist, befindet sich das Fahrzeug 1 bereits auf einem zweiten IST-Weg 15 bzw. schon um dY weiter vorne.

Die durch die Datenübertragung von dem Fahrzeug 1 an die Fernsteuerung 7 und zurück entstandene Differenz dY kann relativ gut herausgerechnet werden. Beispielsweise ergibt sich bei einer Geschwindigkeit des Fahrzeugs 1 von 50 km/h (13,9 m/s) eine Latenzzeit für die Datenübertragung (Hin und Rückweg) von 2 x 80 ms = 160 ms, was einer durch das Fahrzeug 1 in diesem Zeitraum zurückgelegten Strecke (dY) von 2,2 m entspricht. Bei einer Geschwindigkeit des Fahrzeugs 1 von 30 km/h (8,3 m/s) ergibt sich beispielsweise bei einer gleichbleibenden Latenzzeit von 160 ms eine durch das Fahrzeug 1 in diesem Zeitraum zurückgelegte Strecke von 1,3 m. Bei einer Geschwindigkeit des Fahrzeugs 1 von beispielsweise 100 km/h (27,7 m/s) ergibt sich bei einer ebenfalls gleichbleibenden Latenzzeit von 160 ms eine durch das Fahrzeug 1 in diesem Zeitraum zurückgelegte Strecke von 4,4 m. Bei den angegebenen Zeiten handelt es sich nur um eine mögliche Verzögerung im Zusammenhang mit der Datenübertragung. Die Rechendauer der Systeme (Fahrerassistenzsystem 3 und Fernsteuerung 7) ist dabei noch nicht berücksichtigt.

Fig. 4 veranschaulicht, wie eine vorgegebene Trajektorie 11 mittels der Fernsteuerung 7 korrigiert werden kann. Die Wegpunkte/absoluten Koordinaten, welche die vorgegebene Trajektorie 11 in Form einer Linie bilden und in naher Zukunft (im Kamerabild 8, welches kein Bild einer Frontkamera sein muss) liegen, werden wie vorstehend beschrieben an die Fernsteuerung 7 übermittelt und beispielsweise auf den Monitoren 9 angezeigt. Der Benutzer 12 der Fernsteuerung 7 kann das Kamerabild 8 sowie die eingezeichneten Wegpunkte bzw. die Trajektorie 11 überwachen.

In dem durch Fig. 4 gezeigten Ausführungsbeispiel stößt das Fahrerassistenzsystem 3 an seine Systemgrenze, da die temporären Begrenzungen 16 des befahrbaren Teils der Straße 12 eine sichere Steuerung des Fahrzeugs 1 allein mittels des Fahrerassistenzsystems 3 durch die durch Fig. 4 gezeigte Baustelle erschweren. Sofern der Bediener 12 der Fernsteuerung 7 diese Situation erkennt, kann er manuell neue Wegpunkte/Koordinaten bzw. eine korrigierte SOLL-Linie 17 in die Fernsteuerung 7 eingeben, z.B. durch Einzeichnen auf einem Touchscreen (vgl. Fig. 5), um die Situation bestmöglich und sicher zu meistern.

Die manuell neu eingegebenen Wegpunkte/Koordinaten ergeben die in Fig. 4 dargestellte korrigierte Trajektorie 17 in Form einer Linie, um beispielsweise die Begrenzungen 16 zu umfahren. Dieser Linie 17 können wichtige Punkte entnommen werden und an das Fahrzeug 1 gesendet werden, welches so die vorgegebene Fahrtstrecke 17 nachbilden und selbständig abfahren kann. Diese Daten könnten durch "Car to X" Kommunikation an andere Verkehrsteilnehmer, zur weiteren Verarbeitung, weitergegeben werden. Wie viele Punkte zur Rekonstruktion der korrigierten Trajektorie 17 notwendig sind, ist abhängig von der Komplexität der abzufahrenden Linie. Beispielsweise kann eine Gerade durch zwei Punkte bestimmt werden. Die für eine Kurve benötigten Punkte sind jedoch abhängig von einem entsprechenden Kurvenradius und der erwarteten Genauigkeit.

Somit kann das Fahrzeug 1 mittels der Fernsteuerung 7 basierend auf der korrigierten Trajektorie 17 und dem empfangenen äußeren Lagebild, insbesondere in Form des Kamerabilds 8, gesteuert werden. Da nicht jeweils der aktuelle Lenkwinkel des Lenkrads 13 der Fernsteuerung 7 übermittelt werden muss, sondern der abzufahrende Weg 17 welcher in der Zukunft liegt, können langsame Datenverbindungen bis zu einem gewissen Maße kompensiert werden.

Fig. 5 veranschaulicht, wie eine korrigierte Trajektorie 17 mittels eines Stifts 18 über einen Touchscreen 10 in das Kamerabild 8 eingezeichnet werden kann. Während des Einzeichnens kann dabei das Kamerabild 8 ab der ersten Berührung des Stiftes 18 eingefroren werden, und erst dann wieder aktualisiert werden, wenn der Stift 18 von dem Touchscreen 10 wieder abgesetzt wird.

Ebenso ist es gemäß Fig. 6 möglich, dass der Benutzer 12 der Fernsteuerung 7 aus der Ferne die korrigierte Trajektorie 17 in eine Karte 19 mittels eines Stifts 18 einzeichnet, wobei die Karte 19 ergänzend auch alle wichtige Informationen von dem Sensorsystem 2, insbesondere von dessen Kameras, übertragen werden.

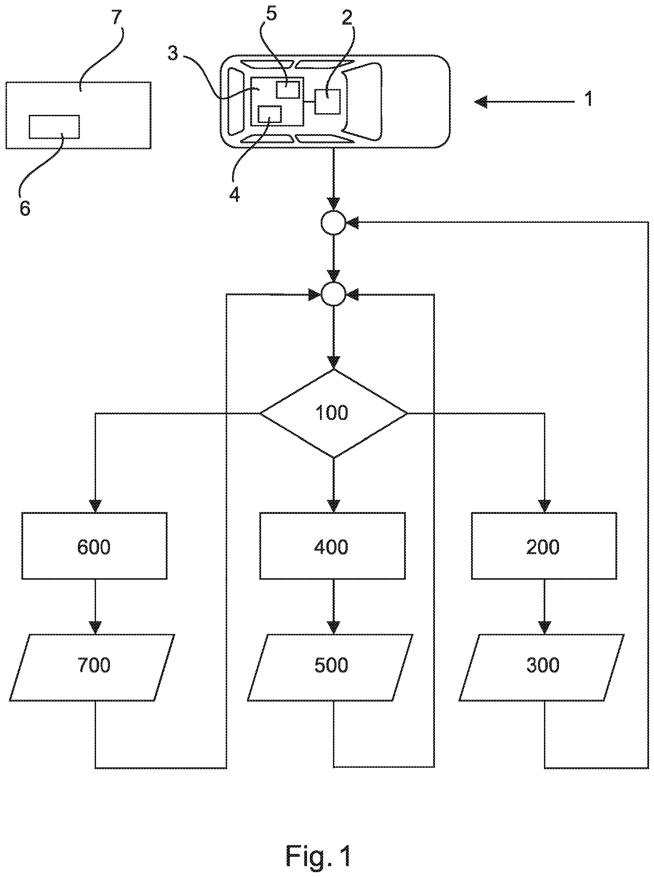

Fig. 1 veranschaulicht weiterhin, wie das Fahrzeug 1 in Abhängigkeit von einer Qualität einer Datenübertragung zwischen dem Fahrzeug 1, insbesondere der ersten Kommunikationsschnittstelle 5 des Fahrerassistenzsystems 3, und der Fernsteuerung 7, insbesondere deren zweite Kommunikationsschnittstelle 6, gesteuert werden kann.

So wird in einem Schritt 100 kontinuierlich die Qualität der zur Verfügung stehenden Datenverbindung zwischen dem Fahrzeug 1 und der Fernsteuerung 7 ermittelt. Sofern dabei festgestellt wird, dass die ermittelte Qualität der Datenverbindung ein vorbestimmtes erstes Qualitätsniveau erreicht (Ergebnis 200), kann das Fahrzeug 1 mittels des Lenkrads 13 der Fernsteuerung 7 oder der Einzeichnung der korrigierten Trajektorie 17 (vgl. Fig. 4 bis 6) gesteuert werden (Schritt 300). Das erste Qualitätsniveau kann dabei derart hoch gewählt werden, dass eine ausreichend schnelle und zuverlässige Datenverbindung insbesondere gefordert wird, welche insbesondere eine hinreichend kurze Latenzzeit zur Steuerung des Fahrzeugs 1 mittels des Lenkrads 13 beinhaltet.

Sofern festgestellt wird, dass die ermittelte Qualität der Datenverbindung ein vorbestimmtes zweites Qualitätsniveau erreicht (Ergebnis 400), welches unterhalb des ersten Qualitätsniveaus liegt, kann das Fahrzeug 1 mittels der Einzeichnung der korrigierten Trajektorie 17 (vgl. Fig. 4 bis 6) gesteuert werden (Schritt 500), nicht jedoch mittels des Lenkrads 13 der Fernsteuerung 7, weil eine hinreichend schnelle Datenübertragung für eine sichere Steuerung des Fahrzeugs 1 mittels des Lenkrads 13 in diesem Falle nicht gewährleistet werden kann.

Sofern festgestellt wird, dass die ermittelte Qualität der Datenverbindung das vorbestimmte zweite Qualitätsniveau nicht erreicht (Ergebnis 600), kann die Steuerung des Fahrzeugs 1 von der Fernsteuerung 7 an das Fahrerassistenzsystem 3 übergeben werden (Schritt 700). Insbesondere kann mittels des Fahrerassistenzsystems 3 nach einer erfolgten Übernahme der Steuerung des Fahrzeugs 1 durch das Fahrerassistenzsystem 3 eine Übergabeaufforderung an einen Fahrer des Fahrzeugs 1 generiert werden, wobei mittels des Fahrerassistenzsystems 3 ein Minimum-Risk-Maneuver durchführt wird, sofern der Fahrer des Fahrzeugs 1 nach Ablauf eines festgelegten Zeitraums nach der Übergabeaufforderung die Steuerung des Fahrzeugs 1 nicht übernimmt. Denkbar ist auch das Absetzen eines automatischen Notrufs in dieser Situation.

## Patentansprüche

1. Verfahren zum Fernsteuern eines Fahrzeugs (1), das Verfahren umfassend die Schritte:
- Erstellen eines äußeren Lagebilds (8) eines Fahrzeugs (1) mittels eines Sensorsystems (2) zur Erfassung der Umgebung des Fahrzeugs (1),
- Vorgeben einer Traj ektorie (11) des Fahrzeugs (1) mittels eines Fahrerassistenzsystems (3) des Fahrzeugs (1),
- drahtloses Übermitteln des äußeren Lagebilds (8) und der Trajektorie (11) an eine Fernsteuerung (7) des Fahrzeugs (1), wobei die Fernsteuerung (7) räumlich getrennt von dem Fahrzeug (1) angeordnet ist, und
- Steuern des Fahrzeugs (1) mittels eines Bedienelements (13) der Fernsteuerung (7) basierend auf der empfangenen Trajektorie (11) und dem empfangenen äußeren Lagebild (8),
**dadurch gekennzeichnet, dass**
- kontinuierlich die Qualität einer zur Verfügung stehenden Datenverbindung zwischen dem Fahrzeug (1) und der Fernsteuerung (7) ermittelt wird, und wobei das Fahrzeug (1) nur dann mittels des Bedienelements (13) der Fernsteuerung (7) gesteuert wird, sofern die ermittelte Qualität der Datenverbindung ein vorbestimmtes erstes Qualitätsniveau erreicht, und
- wobei die Trajektorie (11) nur dann mittels der Fernsteuerung (7) korrigiert wird, sofern die ermittelte Qualität der Datenverbindung ein vorbestimmtes zweites Qualitätsniveau erreicht, wobei das zweite Qualitätsniveau unterhalb des ersten Qualitätsniveaus liegt.

2. Verfahren nach Anspruch 1, wobei die Trajektorie (11) mittels der Fernsteuerung (7) korrigiert wird, und wobei das Fahrzeug (1) mittels der Fernsteuerung (7) basierend auf der korrigierten Trajektorie (17) und dem empfangenen äußeren Lagebild (8) gesteuert wird.

3. Verfahren nach Anspruch 2, wobei ein ergänzendes Bild (19) der Umgebung des Fahrzeugs (1) an die Fernsteuerung (7) übermittelt wird, und wobei die Trajektorie (11) durch die Fernsteuerung (7) basierend auf dem Lagebild (8) und dem ergänzenden Bild (19) korrigiert wird.

4. Verfahren nach Anspruch 1, wobei die Steuerung des Fahrzeugs (1) von der Fernsteuerung (7) an das Fahrerassistenzsystem (3) übergeben wird, sofern die ermittelte Qualität der Datenverbindung das vorbestimmte zweite Qualitätsniveau nicht erreicht.

5. Verfahren nach Anspruch 4, wobei mittels des Fahrerassistenzsystems (3) nach einer erfolgten Übernahme der Steuerung des Fahrzeugs (1) durch das Fahrerassistenzsystem (3) eine Übergabeaufforderung an einen Fahrer des Fahrzeugs (1) generiert wird, und wobei mittels des Fahrerassistenzsystems (3) ein Minimum-Risk-Maneuver durchführt wird, sofern der Fahrer des Fahrzeugs (1) nach Ablauf eines festgelegten Zeitraums nach der Übergabeaufforderung die Steuerung des Fahrzeugs (1) nicht übernimmt.

6. Verfahren nach einem der vorstehenden Ansprüche, wobei eine Kommunikationsverbindung zwischen dem Fahrer des Fahrzeugs (1) und einem Bediener (12) der Fernsteuerung (7) aufgebaut wird.

7. System zum Fernsteuern eines Fahrzeugs (1), das System umfassend eine Fernsteuerung (7), welche dazu eingerichtet ist,
- ein äußeres Lagebild (8) eines Fahrzeugs (1) und eine vorgegebene Trajektorie (11) des Fahrzeugs (1) von dem Fahrzeug (1) zu empfangen, wobei die Fernsteuerung (7) räumlich getrennt von dem Fahrzeug (1) angeordnet ist, und
- das Fahrzeug (1) mittels eines Bedienelements (13) der Fersteuerung (7) basierend auf der empfangenen Trajektorie (11) und dem empfangenen äußeren Lagebild (8) zu steuern, **dadurch gekennzeichnet, dass** das System so eingerichtet ist, dass
- kontinuierlich die Qualität einer zur Verfügung stehenden Datenverbindung zwischen dem Fahrzeug (1) und der Fernsteuerung(7) ermittelt wird, und
- das Fahrzeug (1) nur dann mittels des Bedienelements (13) der Fernsteuerung (7) gesteuert wird, sofern die ermittelte Qualität der Datenverbindung ein vorbestimmtes erstes Qualitätsniveau erreicht, und
- die Trajektorie (11) nur dann mittels der Fernsteuerung(7) korrigiert wird, sofern die ermittelte Qualität der Datenverbindung ein vorbestimmtes zweites Qualitätsniveau erreicht, wobei das zweite Qualitätsniveau unterhalb des ersten Qualitätsniveaus liegt.

## Claims

1. Method for remotely controlling a vehicle (1), the method comprising the steps of:
- creating an exterior situation image (8) of a vehicle (1) by means of a sensor system (2) for sensing the surroundings of the vehicle (1),
- specifying a trajectory (11) of the vehicle (1) by means of a driver assistance system (3) of the vehicle (1),
- wirelessly transmitting the exterior situation image (8) and the trajectory (11) to a remote control (7) of the vehicle (1), wherein the remote control (7) is arranged spatially separate from the vehicle (1), and
- controlling the vehicle (1) by means of an operating element (13) of the remote control (7) on the basis of the received trajectory (11) and the received exterior situation image (8),
**characterized in that**
- the quality of an available data link between the vehicle (1) and the remote control (7) is determined, and wherein the vehicle (1) is only controlled by means of the operating element (13) of the remote control (7) if the determined quality of the data link reaches a predetermined first quality level, and
- wherein the trajectory (11) is only corrected by means of the remote control (7) if the determined quality of the data link reaches a predetermined second quality level, wherein the second quality level lies below the first quality level.

2. Method according to Claim 1, wherein the trajectory (11) is corrected by means of the remote control (7), and wherein the vehicle (1) is controlled by means of the remote control (7) on the basis of the corrected trajectory (17) and the received exterior situation image (8) .

3. Method according to Claim 2, wherein a supplementary image (19) of the surroundings of the vehicle (1) is transmitted to the remote control (7), and wherein the trajectory (11) is corrected by the remote control (7) on the basis of the exterior situation image (8) and the supplementary image (19).

4. Method according to Claim 1, wherein the control of the vehicle (1) is transferred from the remote control (7) to the driver assistance system (3) if the determined quality of the data link does not reach the predetermined second quality level.

5. Method according to Claim 4, wherein, after the control of the vehicle (1) has been taken over by the driver assistance system (3), a transfer request to a driver of the vehicle (1) is generated by means of the driver assistance system (3), and wherein a minimum risk manoeuvre is performed by means of the driver assistance system (3) if the driver of the vehicle (1) does not take over control of the vehicle (1) after a fixed time period has elapsed since the transfer request.

6. Method according to one of the preceding claims, wherein a communication link between the driver of the vehicle (1) and an operator (12) of the remote control (7) is set up.

7. System for remotely controlling a vehicle (1), the system comprising a remote control (7) which is configured
- to receive an exterior situation image (8) of a vehicle (1) and a specified trajectory (11) of the vehicle (1) from the vehicle (1), wherein the remote control (7) is arranged spatially separate from the vehicle (1), and
- to control the vehicle (1) by means of an operating element (13) of the remote control (7) on the basis of the received trajectory (11) and the received exterior situation image (8),
**characterized in that** the system is configured such that
- the quality of an available data link between the vehicle (1) and the remote control (7) is continuously determined, and
- the vehicle (1) is only controlled by means of the operating element (13) of the remote control (7) if the determined quality of the data link reaches a predetermined first quality level, and
- the trajectory (11) is only corrected by means of the remote control (7) if the determined quality of the data link reaches a predetermined second quality level, wherein the second quality level lies below the first quality level.

## Revendications

1. Procédé de commande à distance d'un véhicule (1), le procédé comprenant les étapes suivantes :
- création d'une image de situation extérieure (8) d'un véhicule (1) au moyen d'un système capteur (2) destiné à détecter l'environnement du véhicule (1),
- prédéfinition d'une trajectoire (11) du véhicule (1) au moyen d'un système d'assistance à la conduite (3) du véhicule (1),
- communication sans fil de l'image de situation extérieure (8) et de la trajectoire (11) à une commande à distance (7) du véhicule (1), la commande à distance (7) étant disposée séparée dans l'espace du véhicule (1), et
- commande du véhicule (1) au moyen d'un élément d'opération (13) de la commande à distance (7) en se basant sur la trajectoire (11) reçue et sur l'image de situation extérieure (8) reçue,
**caractérisé en ce que**
- la qualité d'une liaison de données disponible entre le véhicule (1) et la commande à distance (7) est continuellement déterminée, et le véhicule (1) n'étant commandé au moyen de l'élément d'opération (13) de la commande à distance (7) que du moment que la qualité déterminée de la liaison de données atteint un premier niveau de qualité prédéterminé, et
- la trajectoire (11) n'étant corrigée au moyen de la commande à distance (7) que du moment que la qualité déterminée de la liaison de données atteint un deuxième niveau de qualité prédéterminé, le deuxième niveau de qualité étant inférieur au premier niveau de qualité.

2. Procédé selon la revendication 1, la trajectoire (11) étant corrigée au moyen de la commande à distance (7) et le véhicule (1) étant commandé au moyen de la commande à distance (7) et en se basant sur la trajectoire corrigée (17) et sur l'image de situation extérieure (8) reçue.

3. Procédé selon la revendication 2, une image complémentaire (19) de l'environnement du véhicule (1) étant communiquée à la commande à distance (7) et la trajectoire (11) étant corrigée par la commande à distance (7) en se basant sur l'image de situation extérieure (8) et sur l'image complémentaire (19).

4. Procédé selon la revendication 1, la commande du véhicule (1) étant transférée de la commande à distance (7) au système d'assistance à la conduite (3) du moment que la qualité déterminée de la liaison de données n'atteint pas le deuxième niveau de qualité prédéterminé.

5. Procédé selon la revendication 4, une demande de transfert à un conducteur du véhicule (1) étant générée au moyen du système d'assistance à la conduite (3) après une prise en charge réussie de la commande du véhicule (1) par le système d'assistance à la conduite (3), et une manœuvre à risque minimal étant effectuée par le système d'assistance à la conduite (3) du moment que le conducteur du véhicule (1) ne prend pas en charge la commande du véhicule (1) après écoulement d'une période spécifiée après la demande de transfert.

6. Procédé selon l'une des revendications précédentes, une liaison de communication étant établie entre le conducteur du véhicule (1) et un opérateur (12) de la commande à distance (7).

7. Système de commande à distance d'un véhicule (1), le système comprenant une commande à distance (7) qui est conçue pour
- recevoir de la part du véhicule (1) une image de situation extérieure (8) d'un véhicule (1) et une trajectoire (11) prédéfinie du véhicule (1), la commande à distance (7) étant disposée séparée dans l'espace du véhicule (1), et
- commander le véhicule (1) au moyen d'un élément d'opération (13) de la commande à distance (7) en se basant sur la trajectoire (11) reçue et sur l'image de situation extérieure (8) reçue,
**caractérisé en ce que** le système est conçu de telle sorte que
- la qualité d'une liaison de données disponible entre le véhicule (1) et la commande à distance (7) est continuellement déterminée, et
- le véhicule (1) n'est commandé au moyen de l'élément d'opération (13) de la commande à distance (7) que du moment que la qualité déterminée de la liaison de données atteint un premier niveau de qualité prédéterminé, et
- la trajectoire (11) n'est corrigée au moyen de la commande à distance (7) que du moment que la qualité déterminée de la liaison de données atteint un deuxième niveau de qualité prédéterminé, le deuxième niveau de qualité étant inférieur au premier niveau de qualité.
